# EUROPÄISCHE PATENTSCHRIFT

(11) **EP 2 607 096 B1**
(45) Veröffentlichungstag und Bekanntmachung des Hinweises auf die Patenterteilung: **06.09.2017**
(21) Anmeldenummer: 12199176.4
(22) Anmeldetag: 21.12.2012
(51) Int. Cl.: B60B 7/20, F16C 33/80, F16C 33/78

(54) **Radnabenabdeckung**
Wheel hub cover
Revêtement de moyeu de roue

(30) Priorität: 22.12.2011 DE 102011056944
(43) Veröffentlichungstag der Anmeldung: 26.06.2013
(73) Patentinhaber: Wilhelm, Heinz, 67368 Westheim (DE)
(72) Erfinder: Wilhelm, Heinz, 67368 Westheim (DE)
(74) Vertreter: Bernhardt, Reinhold

(56) Entgegenhaltungen:
- EP-A1- 1 053 893
- DE-A1- 1 547 626
- DE-A1- 3 919 268
- DE-B1- 2 629 436
- DE-U1-202008 010 695
- GB-A- 854 336
- GB-A- 2 176 044
- JP-A- 2002 258 787
- US-A- 2 707 131
- US-A- 2 869 262
- US-A- 3 608 987
- US-A- 5 659 989
- US-A1- 2006 186 726
- US-A1- 2007 176 482
- US-A1- 2007 266 603
- US-B1- 6 702 396

## Beschreibung

Die Erfindung betrifft eine Nabenabdeckung für ein Rad eines Fahrzeugs, insbesondere eines Kraftfahrzeugs, mit einer an dem Rad zu befestigenden Halteeinrichtung, an der um eine Drehachse ein Trägerelement zur Aufnahme eines Zierkörpers gelagert ist, wobei das Trägerelement an einem um die Drehachse herum gebildeten und dem Trägerelement zugewandten Flächenabschnitt des Halteelements angeordnet ist derart, dass zwischen dem Flächenabschnitt und dem Trägerelement ein Schlitz gebildet ist, der Flächenabschnitt mit einem zur Drehachse konzentrischen Absatz versehen ist und das Trägerelement radial über den Absatz vorsteht und auf seiner der Halteeinrichtung zugewandten Seite zumindest im Bereich des Absatzes eine zu dem Flächenabschnitt komplementäre Form aufweist.

Eine solche Nabenabdeckung, die eine das Rad abdeckende Radkappe und ein darauf drehbar angeordnetes Trägerelement umfasst, ist aus der US 5,659,989 bekannt. Ein in der Radkappe und dem Trägerelement gebildeter Absatz und die zueinander komplementäre Form der Radkappe und des Trägerelements bilden eine Stabilisierungsstruktur, um eine konzentrische Ausrichtung des Trägerelements zu halten und Schwingungen des Trägerelements gegenüber der Halteeinrichtung zu begrenzen.

Die DE 39 19 268 A1 beschreibt eine Radkappe für ein Fahrzeugrad, die eine Befestigungseinrichtung aufweist, die einen mit einem Absatz versehenen Flächenabschnitt umfasst. Zwischen dem Flächenabschnitt und einem drehbar an der Befestigungseinrichtung angebrachten scheibenförmiges Oberteil ist ein Schlitz gebildet, wobei das Oberteil radial über den Absatz vorsteht.

Eine weitere Nabenabdeckung geht aus der DE 20 2008 010 695 U1 des Anmelders hervor. Die Halteeinrichtung ist mit Rastfedern versehen, mittels derer sie an einer zentrischen Öffnung einer Felge des Rads befestigt werden kann. An der Halteeinrichtung ist eine Bohrung vorgesehen, in der in dem Drehlager eine an dem Trägerelement gebildete Welle geführt ist. Auf dem Trägerelement ist eine Schutzabdeckung befestigt, die bis über die Halteeinrichtung vorsteht und die Nabenabdeckung insgesamt und insbesondere das Drehlager vor Verschmutzungen schützt.

Weitere Nabenabdeckungen sind aus der GB 854,336, der GB 2 176 044 A, de US 2,869,262 sowie der JP 2002258787 A bekannt.

Nabenabdeckungen dieser Art sind normalerweise mit einer Verzierung, z.B. einem Logo eines Fahrzeug- oder Felgenherstellers, versehen. Dank der drehbaren Lagerung rotiert das Trägerelement bei Fahrt des Fahrzeugs nicht zusammen mit den Rädern, sondern behält seine Position zur Horizontalen bei. Die Verzierung ist dadurch auch während einer Drehung des Rads erkennbar und es wird vermieden, dass sie bei Stillstand des Fahrzeugs gegenüber der Horizontalen verdreht ist.

Der Erfindung liegt die Aufgabe zugrunde, eine Nabenabdeckung der eingangs genannten Art zu schaffen, die einfach aufgebaut und gegen Verklemmung des Trägerelements an der Halteeinrichtung geschützt ist.

Erfindungsgemäß wird die Aufgabe durch eine Nabenabdeckung laut Anspruch 1 gelöst. Vorteilhaft werden Schmutzpartikel, die in den Schlitz gelangen, durch die Drehbewegung der Halteeinrichtung oder des Trägerelements radial nach außen aus dem Schlitz heraus transportiert. Die Nabenabdeckung reinigt sich bei Bewegung des Rads selbst.

Der genannte Absatz hindert die Schmutzpartikel daran, zu einem Drehlager, über welches das Trägerelement an der Halteeinrichtung gelagert ist, zu gelangen.

Sollten einzelne Schmutzpartikel bis zu dem Absatz gelangen, werden sie von diesem aufgehalten und aufgrund der oben beschriebenen Fliehkräfte wieder nach außen transportiert.

Der Absatz bildet in der bevorzugten Ausführungsform in radialer Richtung von der Drehachse weg gesehen eine Stufe zu dem Trägerelement hin. Alternativ wäre aber auch ein in die entgegengesetzte Richtung gebildeter Absatz vorstellbar.

In einer Ausgestaltung der Erfindung ist zur Abdichtung des Drehlagers gegen Verschmutzung an dem Trägerelement auf seiner der Halteeinrichtung zugewandten Seite oder an der Halteeinrichtung auf ihrer dem Trägerelement zugewandten Seite ein Dichtelement angeordnet, das an einem Innenring oder an einem Außenring des Drehlagers anliegt und den Bereich zwischen dem Außenring und dem Innenring des Drehlagers überdeckt.
Durch das Dichtelement wird das Drehlager ausreichend gegen Verschmutzung geschützt und sichergestellt, dass die Nabenabdeckung auch dann nicht verklemmt, wenn bei Fahrt Schmutzpartikel an sie gelangen. Im Gegensatz zu den bekannten Vorrichtungen wird keine zusätzliche bis über die Halteeinrichtung ragende Schutzabdeckung mehr benötigt. Die Nabenabdeckung lüsst sich deshalb kostengünstiger herstellen.

Zweckmäßigerweise steht das Dichtelement von dem Innenring oder dem Außenring über den Bereich zwischen dem Außenring und dem Innenring so weit vor, dass es den Bereich zwischen dem Außen- und dem Innenring vollständig überdeckt und dabei kontaktlos so dicht an den jeweils gegenüber liegenden Außenring oder Innenring heranragt, dass keine Schmutzpartikel in das Drehlager eindringen können. Da das Dichtelement nur mit entweder dem Innen- oder dem Außenring in Kontakt ist, wird ein die Drehbewegung hemmendes Schleifen vermieden.

In der bevorzugten erstgenannten Variante der Erfindung, die eine besonders kompakten Aufbau erlaubt, ist der Außenring mit der Halteeinrichtung und der Innenring, vorzugsweise über ein in dem Innenring angeordnete Welle, mit dem Trägerelement drehfest verbunden. Das Dichtelement ist durch einen, vorzugsweise zylindrischen, an dem Trägerelement vorgesehenen Vorsprung gebildet und liegt an dem Innenring an. Vorteilhaft wirken bei der Drehbewegung auf das Drehelement und ggf. dorthin gelangte Schmutzpartikel Fliehkräfte, die diese von dem Drehlager wegbewegen.

Alternativ wäre bei dieser Variante auch vorstellbar, dass das Dichtelement an der Halteeinrichtung angeordnet ist und an dem Außenring anliegt und von dort aus den Bereich überdeckt. Das Dichtelement ist dann zweckmäßigerweise durch einen kreisförmigen Vorsprung gebildet. Diese Alternative hat den Vorteil, dass das Drehlager durch das Dichtelement von außen geschützt ist.

In der zweitgenannten Variante ist die Halteeinrichtung, vorzugsweise über eine von Ihr vorstehende Haltewelle, mit dem Innenring drehfest verbunden. Das Drehlager sitzt dann in einem Gehäuse des Trägerelements und der Außenring ist an dem Trägerelement drehfest angeordnet. Das Dichtelement ist zweckmäßigerweise an dem Trägerelement angeordnet und ragt von dem Außenring aus über den genannten Bereich bis an den Innenring vor.
Bei dieser Variante ist es alternativ vorstellbar, das Dichtelement an der Halteeinrichtung anzuordnen, sodass es in Kontakt mit dem Innenring steht und von dort aus den Bereich überdeckt.

In der bevorzugten Ausführungsform der Erfindung ist das Dichtelement einstückig mit dem Trägerelement oder dem Halteelement gebildet. Es ist zweckmäßigerweise konzentrisch zur Drehachse des Drehlagers angeordnet.

Zweckmäßigerweise ist der Schlitz nicht breiter als 0,7 mm, vorzugsweise nicht breiter als 0,5 mm. Schmutzpartikel, die größer sind als der Schlitz breit ist, können in den Schlitz nicht eindringen.

Der Abstand zwischen der Halteeinrichtung und dem Trägerelement ist zweckmäßigerweise zumindest in einem in radialer Richtung gesehen hinter dem Absatz liegenden Außenbereich kleiner als 0,7 mm, vorzugsweise 0,5 mm, und/oder ist zumindest an dem Absatz der Abstand in radialer Richtung kleiner als 0,7 mm, vorzugsweise 0,5 mm.

In einer weiteren Ausgestaltung der Erfindung weist das Trägerelement zur Bildung des exzentrischen Schwerpunkts eine zusätzliche Exzentermasse auf. Das Trägerelement weist dann einen abseits der Drehachse liegenden Schwerpunkt auf, sodass das Trägelement von selbst seine Ausrichtung zur Horizontalen beibehält.

Die Erfindung wird nachfolgend anhand eines Ausführungsbeispiels und den beiliegenden, sich auf das Ausführungsbeispiel beziehenden Zeichnungen erläutert. Es zeigen:
- Fig. 1: eine erfindungsgemäße Nabenabdeckung im Schnitt,
- Fig. 2: die Nabenabdeckung nach Fig. 1 in Explosionsdarstellung,
- Fig. 3: einen Teil der Nabenabdeckung nach Fig. 1 in Seitenansicht,
- Fig. 4: eine weitere erfindungsgemäße Nabenabdeckung in Explosionsdarstellung, und
- Fig. 5: eine weitere erfindungsgemäße Nabenabdeckung im Schnitt.

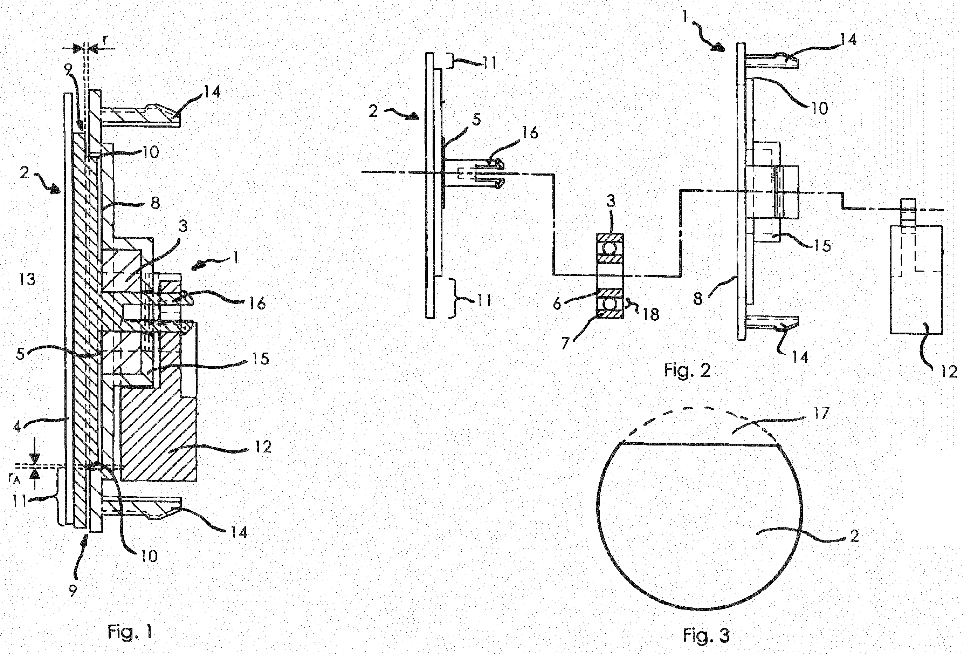

Eine in den Fig. 1 und 2 gezeigte erfindungsgemäße Nabenabdeckung weist eine Halteeinrichtung 1 und ein an der Halteeinrichtung 1 drehbar gelagertes Trägerelement 2 zur Aufnahme eines Zierkörpers 4 auf. Die Halteeinrichtung und das Trägerelement 2 sind mittels Spritzguss aus Kunststoff gebildet.

Die Halteeinrichtung 1 ist mit Rastfedern 14 versehen, mit denen sie sich an einer mittigen Öffnung an einer Felge eines Kraftfahrzeugrads (hier nicht gezeigt) befestigen lässt. Sie umfasst ferner einen einseitig offenen Gehäuseabschnitt 15, in der ein Außenring 7 eines Kugellagers 3 befestigt ist.

Das Trägerelement 2 weist eine scheibenförmige Trägerplatte 13 auf, an der eine Verzierung 4, z.B. eine bedruckte Scheibe oder eine Zierfigur, angeordnet werden kann.
An die Trägerplatte 13 ist eine Welle 16 angeformt, die von der Trägerplatte 13 senkrecht vorsteht und drehfest mit einem Innenring 7 des Kugellagers 3 verbunden ist. Die Welle 16 ragt durch einen Innenring 6 des Kugellagers 3 und eine in dem Gehäuseabschnitt 15 vorgesehen Öffnung hindurch und ist an ihrem der Trägerplatte 17 abgewandeten Ende drehfest über Rastelemente mit einer Exzentermasse 12 verbunden.
Die Trägerplatte 13 weist, wie Fig. 3 zu entnehmen ist, eine von einer runden Form abweichende Materialausnehmung 17 auf, anhand der zur Anbringen der Verzierung 4 die Stellung der Trägerplatte 13 im Verhältnis zu der Exzentermasse 12 erkennbar ist.

Auf der der Halteeinrichtung 1 zugewandten Seite der Trägerplatte 13 ist um die Welle 16 herum ein zylindrischer Vorsprung 5 gebildet, an dem der Innenring 6 des Kugellagers 3 anliegt. Der Vorsprung 5 weist einen Radius auf derart, dass der Vorsprung 5 einen Bereich 18 zwischen dem Innenring 6 und dem Außenring 7 überdeckt und bis an den Außenring 7 heranreicht, aber nicht in Kontakt mit ihm kommt. Der Vorsprung 5 ist einstückig mit der Trägerplatte 13 und der Welle 16 gebildet.

Wie insbesondere Fig. 1 zu entnehmen ist, sind die Halteeinrichtung 1 und das Trägerelement 2 in einem derartigen Abstand voneinander angeordnet, dass zwischen ihnen ein Schlitz 9 gebildet ist, der eine Breite r von 0,5 mm aufweist. Die Geometrien der Halteeinrichtung 1 und des Trägerelements 2 sind dabei so aufeinander abgestimmt, dass der Schlitz 9 radial nach außen hin offen ist.

Ein der Trägerplatte 13 zugewandter Flächenabschnitt 8 der Halteeinrichtung 1 ist mit einem konzentrischen Absatz 10 versehen, der in radialer Richtung von der Drehachse des Drehlagers 3 weg gesehen eine Stufe hin zur Trägerplatte 13 bildet.
Die Trägerplatte 13 weist auf Ihrer der Halteeinrichtung 1 zugewandten Seite eine zu dem Flächenabschnitt 8 komplementäre Fläche auf, d.h. es ist in entgegengesetzter Richtung ein Absatz gebildet. An dem Absatz besteht in radialer Richtung ein Abstand r_{A} = 0,5 mm.

Im Folgenden wird die Funktionsweise der erfindungsgemäßen Nabenabdeckung erläutert.

Wird ein mit der Nabenabdeckung versehene Rad gedreht, wird die Halteeinrichtung 1 mit dem Rad mitbewegt. Das Trägerelement 2 dagegen wird, da aufgrund des Exzentergewichts 12 sein Schwerpunkt von der Drehachse entfernt liegt und dadurch das Trägerelement 2 im Verhältnis zu der Drehachse des Kugellagers 3 durch die Schwerkraft nach unten gezogen wird, auch bei Drehung der Halteeinrichtung 1 in gleich bleibender Stellung zur Horizontalen gehalten. Das Trägerelement führt bei Drehung des Rades also im Verhältnis zur Halteeinrichtung 1 eine Drehbewegung durch, rotiert aber bezogen auf die Umgebung nicht.

Die Nabenabdeckung ist gegen Verschmutzung des Bereichs zwischen der Halteeinrichtung 1 und dem Trägerelement 2 dadurch geschützt, dass der Schlitz 9 mit r = 0,5 mm relativ schmal ist und dadurch nur verhältnismäßig kleine Schmutzpartikel eindringen können. Ferner werden die Schmutzpartikel, sofern sie überhaupt in den Schlitz 9 gelangen, durch die Drehbewegung der Halteeinrichtung 1 bzw. des Trägerelements 2 und die damit verbundenen Fliehkräfte durch die Öffnung des Schlitzes 9 in radialer Richtung nach und nach aus dem Schlitz 9 herausbewegt.
Der Absatz 10 bildet ein weiteres Hindernis für die Schmutzpartikel. Sollten diese bis hin zu dem Absatz 10 gelangen, werden sie zunächst durch diesen davon abgehalten, bis hin zur Drehachse zu gelangen, und bei Drehbewegungen des Trägerelements 2 wie oben beschrieben durch die Öffnung aus dem Schlitz 9 heraus transportiert.
Ein Verklemmen des Trägerelements 2 an der Halteeinrichtung 1 aufgrund von Verschmutzungen im Bereich des Schlitzes 9 wird durch den erfindungsgemäßen Aufbau vermieden.

Schließlich ist das Kugellager 3 durch den Vorsprung 5 vor Verschmutzungen geschützt. Da der Bereich zwischen dem Innenring 6 und dem Außenring 7 durch den Vorsprung 5 abgedeckt ist und der Vorsprung 5 so dicht an den Außenring 7 heranreicht, dass die Schmutzpartikel nicht in den Bereich vordringen können, ist sichergestellt, dass das Kugellager 3 nicht verschmutzt und aufgrund von Verunreinigungen verklemmt.

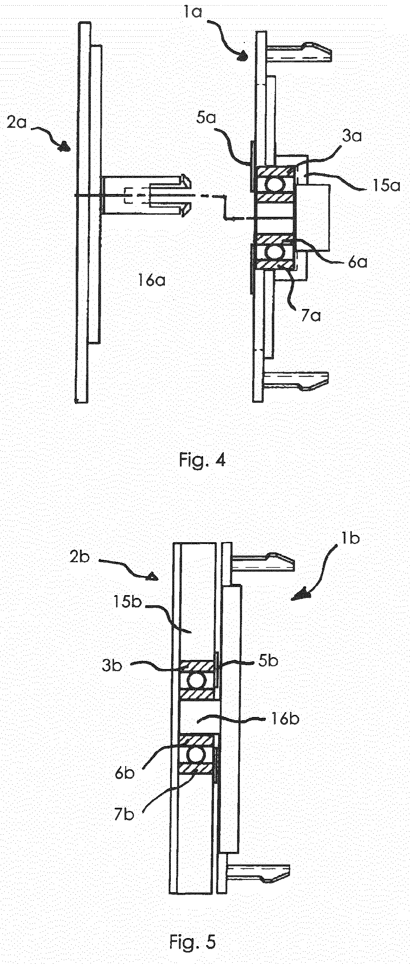

Es wird nun auf die Fig. 4 und 5 Bezug genommen, wo gleiche oder gleichwirkende Teile mit derselben Bezugszahl wie in Fig. 1 und 2 bezeichnet sind und der betreffenden Bezugszahl jeweils ein Buchstabe beigefügt ist.

Bei einer in Fig. 4 gezeigten Nabenabdeckung ist abweichend von dem Ausführungsbeispiel nach Fig. 1 und 2 ein durch ein kreisförmiges, zu einer Drehachse eines Kugellagers 3a konzentrisches Dichtelement 5a, das an einem Außenring 7a des Kugellagers 3a anliegt und an seinen Innenring 6a heranragt, ohne diesen zu berühren, an der Halteeinrichtung 1a gebildet. Das Trägerelement 2a ist über eine Welle 16a derart an der Halteeinrichtung 1a gelagert, dass zwischen dem Dichtelement 5a und dem Trägerelement 2a ein Abstand besteht.

Fig. 5 zeigt eine weitere erfindungsgemäße Nabenabdeckung, bei der ein Kugellager 3b in einem Gehäuse 15b eines Trägerelements 2b sitzt und ein Außenring 7b des Kugellagers 3b drehfest in dem Gehäuse 15b befestigt ist. Das Kugellager 3b ist von einer der Halteeinrichtung 1b abgewandten Außenseite des Trägerelements 2b in das Gehäuse 15b einsetzbar und wird durch Aufsetzen einer Zierplatte 20 nach außen abgeschlossen. Abweichend von dem Ausführungsbeispiel nach Fig. 1 und 2 ist ein Welle 16b an der Halteeinrichtung 1b gebildet und ein hier nicht gezeigtes Exzentergewicht ist innerhalb des Gehäuses 15b angeordnet.
Ein Dichtelement 5b ist durch einen über den Außenring 7b bis hin zu einem Innenring 6b des Kugellagers 3b ragenden Vorsprung gebildet.

## Patentansprüche

1. Nabenabdeckung für ein Rad eines Fahrzeugs, insbesondere Kraftfahrzeugs, mit einer an dem Rad zu befestigenden Halteeinrichtung (1), an der um eine Drehachse (D) drehbar ein Trägerelement (2) zur Aufnahme eines Zierkörpers (4) gelagert ist, wobei das Trägerelement (2) an einem um die Drehachse (D) herum gebildeten und dem Trägerelement (2) zugewandten Flächenabschnitt (8) des Halteelements (1) angeordnet ist ; der Flächenabschnitt (8) mit einem zur Drehachse (D) konzentrischen Absatz (10) versehen ist und das Trägerelement (2) radial über den Absatz (10) vorsteht ; **dadurch gekennzeichnet, dass** zwischen dem Flächenabschnitt und dem Trägerelement ein Schlitz gebildet ist, und das Trägerelement auf seiner der Halteeinrichtung (1) zugewandten Seite zumindest im Bereich des Absatzes (10) eine zu dem Flächenabschnitt (8) komplementäre Form aufweist, wobei die Nabenabdeckung zur Vermeidung einer Ansammlung von Verschmutzungen, die Drehbewegungen des Trägerelements (2) behindern, an dem Schlitz (9) in radialer Richtung nach außen hin offen ist.

2. Nabenabdeckung nach Anspruch 1,
**dadurch gekennzeichnet,**
**dass** zur Abdichtung gegen Verschmutzung eines Drehlagers (3), über das das Trägerelement an der Halteeinrichtung gelagert ist, an dem Trägerelement (2) auf seiner der Halteeinrichtung (1) zugewandten Seite oder an der Halteeinrichtung (1) auf ihrer dem Trägerelement (2) zugewandten Seite ein Dichtelement (5) vorgesehen ist, das an einem Innenring (6) oder an einem Außenring (7) des Drehlagers (3) anliegt und den Bereich (8) zwischen dem Außenring (7) und dem Innenring (6) des Drehlagers (3) überdeckt.

3. Nabenabdeckung nach Anspruch 2,
**dadurch gekennzeichnet,**
**dass** das Dichtelement (5) von dem Innenring (6) oder dem Außenring (7) über den Bereich (8) zwischen dem Außenring (7) und dem Innenring (6) so weit vorsteht, dass es den Bereich (8) vollständig überdeckt und dabei kontaktlos dicht an den jeweils gegenüber liegenden Außenring (7) oder Innenring (6) heranragt.

4. Nabenabdeckung nach Anspruch 2 oder 3,
**dadurch gekennzeichnet,**
**dass** das Dichtelement durch einen am Trägerelement (2) angeordneten, vorzugsweise zylindrischen oder kreisförmigen, Vorsprung (5) gebildet ist.

5. Nabenabdeckung nach einem der Ansprüche 1 bis 4,
**dadurch gekennzeichnet,**
**dass** der Absatz (10) in radialer Richtung von der Drehachse (D) weg gesehen eine Stufe zu dem Trägerelement (2) hin bildet.

6. Nabenabdeckung nach einem der Ansprüche 1 bis 5,
**dadurch gekennzeichnet,**
**dass** der Abstand (r) zwischen der Halteeinrichtung (1) und dem Trägerelement (2) zumindest in einem radial außerhalb des Absatzes (10) liegenden Außenbereich (11) kleiner als 0,7 mm, vorzugsweise 0,5 mm, ist und/oder zumindest an dem Absatz (5) der Abstand (r_{A}) in radialer Richtung kleiner als 0,7 mm, vorzugsweise 0,5 mm, ist.

7. Nabenabdeckung nach einem der Ansprüche 1 bis 6,
**dadurch gekennzeichnet,**
**dass** das Trägerelement (2) eine Trägerplatte (13) aufweist, die eine, vorzugsweise runde, scheibenartige Form aufweist.

8. Nabenabdeckung nach einem der Ansprüche 1 bis 7,
**dadurch gekennzeichnet,**
**dass** das Trägerelement (2) zur Bildung des exzentrischen eine zusätzliche Exzentermasse (13) aufweist, die mit einer in dem Drehlager (3) angeordneten Welle (16) des Trägerelements (2) verbunden ist oder an der Trägerplatte (13) angeordnet ist.

## Claims

1. Hub cover for a wheel of a vehicle, in particular motor vehicle, with a holding device (1) which is to be fastened to the wheel and on which a support element (2) for receiving a decorative body (4) is mounted so as to be rotatable about an axis of rotation (D), wherein the support element (2) is arranged on a surface portion (8) of the holding element (1) that is formed around the axis of rotation (D) and faces the support element (2); the surface portion (8) is provided with a shoulder (10) which is concentric with respect to the axis of rotation (D), and the support element (2) protrudes radially over the shoulder (10); **characterized in that** a slot is formed between the surface portion and the support element, and the support element, on its side facing the holding device (1), has, at least in the region of the shoulder (10), a shape which is complementary with respect to the surface portion (8), wherein the hub cover is open outwards in the radial direction at the slot (9) in order to avoid an accumulation of dirt preventing the rotational movements of the support element (2).

2. Hub cover according to Claim 1, **characterized in that**, in order to seal a rotary bearing (3), via which the support element is mounted on the holding device, against dirt, a sealing element (5) is provided on the support element (2), on its side facing the holding device (1), or on the holding device (1), on its side facing the support element (2), said sealing element (5) lying against an inner ring (6) or against an outer ring (7) of the rotary bearing (3) and covering the region (8) between the outer ring (7) and the inner ring (6) of the rotary bearing (3).

3. Hub cover according to Claim 2, **characterized in that** the sealing element (5) protrudes from the inner ring (6) or the outer ring (7) over the region (8) between the outer ring (7) and the inner ring (6) to such an extent that it completely covers the region (8) and projects tightly without contact towards the respectively opposite outer ring (7) or inner ring (6).

4. Hub cover according to Claim 2 or 3, **characterized in that** the sealing element is formed by a preferably cylindrical or circular projection (5) arranged on the support element (2).

5. Hub cover according to one of Claims 1 to 4, **characterized in that** the shoulder (10) forms a step towards the support element (2), as seen in the radial direction away from the axis of rotation (D).

6. Hub cover according to one of Claims 1 to 5, **characterized in that** the distance (r) between the holding device (1) and the support element (2) is smaller than 0.7 mm, preferably 0.5 mm, at least in an outer region (11) lying radially outside the shoulder (10), and/or, at least at the shoulder (5), the distance (r_{A}) in the radial direction is smaller than 0.7 mm, preferably 0.5 mm.

7. Hub cover according to one of Claims 1 to 6, **characterized in that** the support element (2) has a support plate (13) which has a preferably circular, disc-like shape.

8. Hub cover according to one of Claims 1 to 7, **characterized in that**, in order to form the excentric, the support element (2) has an additional excentric mass (13) which is connected to a shaft (16) of the support element (2), which shaft is arranged in a rotary bearing (3), or is arranged on the support plate (13).

## Revendications

1. Couverture de moyeu pour une roue d'un véhicule, en particulier d'un véhicule automobile, comportant un dispositif de retenue (1) à fixer sur la roue, sur lequel un élément porteur (2) destiné à recevoir un corps enjoliveur (4) est monté avec faculté de rotation autour d'un axe de rotation (D), l'élément porteur (2) étant agencé sur une portion surfacique (8) de l'élément de retenue (1) formée tout autour de l'axe de rotation (D) et tournée vers l'élément porteur (2) ;
la portion surfacique (8) étant pourvue d'un talon (10) concentrique par rapport à l'axe de rotation (D) et l'élément porteur (2) faisant saillie radialement au-delà du talon (10) ;
**caractérisée en ce que**
une fente est formée entre la portion surfacique et l'élément porteur et l'élément porteur comprend sur son côté tourné vers le dispositif de retenue (1) une forme complémentaire à la portion surfacique (8) au moins dans la zone du talon (10), et la couverture de moyeu est ouverte en direction radiale vers l'extérieur au niveau de la fente (9) en vue d'éviter une accumulation de saletés qui empêche les mouvements de rotation de l'élément porteur (2).

2. Couverture de moyeu selon la revendication 1,
**caractérisée en ce que**
en vue d'assurer un étanchement à l'encontre de l'encrassement d'un palier rotatif (3) par lequel l'élément porteur est monté sur le dispositif de retenue, il est prévu un élément d'étanchéité (5) sur l'élément porteur (2) sur son côté tourné vers le dispositif de retenue (1), ou bien sur le dispositif de retenue (1) sur son côté tourné vers l'élément porteur (2), élément qui prend appui contre une bague intérieure (6) ou contre une bague extérieure (7) du palier rotatif (3) et qui recouvre la zone (8) entre la bague extérieure (7) et la bague intérieure (6) du palier rotatif (3).

3. Couverture de moyeu selon la revendication 2,
**caractérisée en ce que**
l'élément d'étanchéité (5) fait saillie de la bague intérieure (6) ou de la bague extérieure (7) au-delà de la zone (8) entre la bague extérieure (7) et la bague intérieure (6) aussi loin qu'il recouvre complètement la zone (8) et qu'il s'approche sans contact physique et très proche jusqu'à la bague extérieure (7) ou la bague intérieure (6) respectivement opposée.

4. Couverture de moyeu selon la revendication 2 ou 3,
**caractérisée en ce que**
l'élément d'étanchéité est formé par une saillie (5) agencée sur l'élément porteur (2) et de préférence de forme cylindrique ou circulaire.

5. Couverture de moyeu selon l'une des revendications 1 à 4,
**caractérisée en ce que**
le talon (10) constitue un gradin vers l'élément porteur (2) en direction radiale, en vue en éloignement de l'axe de rotation (D).

6. Couverture de moyeu selon l'une des revendications 1 à 5,
**caractérisée en ce que**
la distance (r) entre le dispositif de retenue (1) et l'élément porteur (2) est inférieure à 0,7 mm, de préférence 0,5 mm, au moins dans une zone extérieure (11) située radialement à l'extérieur du talon (10), et/ou la distance (r_{A}) est inférieure à 0,7 mm, de préférence 0,5 mm, en direction radiale au moins sur le talon (5).

7. Couverture de moyeu selon l'une des revendications 1 à 6,
**caractérisée en ce que**
l'élément porteur (2) comprend une plaque de support (13) qui présente une forme de disque, de préférence ronde.

8. Couverture de moyeu selon l'une des revendications 1 à 7,
**caractérisée en ce que**
pour réaliser l'excentrique, l'élément porteur (2) comprend une masselotte excentrique (12) supplémentaire qui est reliée à un arbre (16) de l'élément porteur (2) agencé dans le palier rotatif (3) ou qui est agencée sur la plaque de support (13).
